# EUROPÄISCHE PATENTSCHRIFT

(11) **EP 1 185 353 B1**
(45) Veröffentlichungstag und Bekanntmachung des Hinweises auf die Patenterteilung: **13.11.2002**
(21) Anmeldenummer: 00945541.1
(22) Anmeldetag: 19.05.2000
(51) Int. Cl.: B01D 46/24, F02M 35/024

(54) **RINGFILTER AUS STERNFÖRMIG GEFALTETEM FILTERBAHNMATERIAL**
RING FILTER CONSISTING OF STAR-SHAPED FOLDED FILTERING MATERIAL
FILTRE CYLINDRIQUE CONSTITUE D'UNE BANDE DE MATERIAU FILTRANT PLIEE EN ETOILE

(30) Priorität: 23.06.1999 DE 19928448
(43) Veröffentlichungstag der Anmeldung: 13.03.2002
(73) Patentinhaber: MAHLE Filtersysteme GmbH, 70376 Stuttgart (DE)
(72) Erfinder: KÖHLER, Wilhelm, D-70469 Stuttgart (DE); SCHÖNHERR, Wilhelm, A-9150 Bleiburg (AT); VORBACH, Norbert, D-71549 Auenwald (DE)
(74) Vertreter: Patentanwalts-Partnerschaft, Rotermund + Pfusch + Bernhard
(86) Internationale Anmeldenummer: DE0001623
(87) Internationale Veröffentlichungsnummer: WO01000300

(56) Entgegenhaltungen:
- EP-A- 0 498 757
- WO-A-97/22795
- US-A- 5 484 466

## Beschreibung

Die Erfindung betrifft ein Ringfilter aus sternförmig gefaltetem Filterbahnmaterial nach dem Oberbegriff des Patentanspruchs 1.

Ein derartiges Ringfilter ist aus EP 0 498 757 Al bekannt.

Die Erfindung beschäftigt sich mit dem Problem, den stirnseitigen Verschluß bei dem gattungsgemäßen Ringfilter bei insbesondere einem aufgeschäumten, elastischen Kunststoff-Verschlußmaterial dauerfest zu gestalten sowie eine rationelle Herstellung des Verschlußbereiches eines solchen Filters durch einen dies ermöglichenden Aufbau des Verschlußbereiches zu ermöglichen. Darüber hinaus soll in dem stirnseitigen Verschlußbereich ein konstruktiver Aufbau gegeben sein, der eine sichere und dichte Anbindung des Verschlußmaterials an das gefaltete Filterbahnmaterial gewährleistet.

Gelöst wird dieses Problem durch die Ausbildung eines gattungsgemäßen Ringfilters nach den kennzeichnenden Merkmalen des Patentanspruchs 1.

Zweckmäßige Ausgestaltungen sind Gegenstand der Unteransprüche und werden anhand eines gezeichneten Ausführungsbeispieles noch näher erläutert werden.

Folgende besonderen Vorteile ergeben sich durch die erfindungsgemäße Lösung.

Insbesondere bei Ringfiltern mit einer großen Abmessung, wie sie bei Ringfiltern, die beispielsweise als Luftfilter für Nutzkraftfahrzeuge bestimmt sind und bei denen das Verschlußmaterial aus einem aufgeschäumten Kunststoffmaterial mit elastischen Eigenschaften besteht, wird durch den plattenförmigen Einsatz nicht nur teures Kunststoffmaterial eingespart, sondern der verschlossene Ringfilterboden kann durch die Auswahl eines steifen Materials für den plattenförmigen Einsatz gegen ein unangenehme Geräusche verursachendes Bodenschwingen während des Filterbetriebes sicher geschützt werden. Solche Bodenschwingungen lassen sich bei einem durchgehenden Boden aus aufgeschäumtem, elastischem Kunststoffmaterial in der Regel nicht vermeiden.

Die Verbindung des plattenförmigen Einsatzes in dem stirnseitigen Verschluß des Ringfilterelementes ermöglicht eine rationelle Herstellung des Filters, indem der plattenförmige Einsatz gemeinsam mit dem Ringfilterelement und der in diesem vorhandenen Rohrzarge in die Form eingesetzt werden kann, in der der stirnseitige Verschluß an das Filterbahnmaterial einschließlich der dieses stützenden Rohrzarge angeformt wird.

Wird eine Verbindung des plattenförmigen Einsatzes an der Rohrzarge gewählt, bei der eine axiale Fixierung des plattenförmigen Einsatzes innerhalb der Rohrzarge vorliegt, ist eine besonders dauerfeste Anbindung des plattenförmigen Einsatzes in dem angeformten Verschlußmaterial gewährleistet. Der Verbindungsbereich ist dann keinen Bodenschwingungen während des Filterbetriebes ausgesetzt.

Durch eine axiale Fixierung des plattenförmigen Einsatzes an der Rohrzarge des Ringfilters ist eine längenmäßig exakte Herstellung des Ringfilters möglich. Näheres hierzu ist bei der Beschreibung des Ausführungsbeispieles angegeben.

In der ein Ausführungsbeispiel darstellenden Zeichnung zeigen
- Fig. 1: ein Ringfilterelement teils in einer Ansicht, teils in einem Längsschnitt,
- Fig. 2: einen Ausschnitt II aus Fig. 1,
- Fig. 3: einen Schnitt nach Linie III-III in Fig. 4 durch einen als Kreisscheibe ausgebildeten plattenförmigen Einsatz,
- Fig. 4: eine Ansicht auf die Kreisscheibe nach dem Pfeil IV in Fig. 3,
- Fig. 5: eine Ansicht auf die Kreisscheibe nach dem Pfeil V in Fig. 3.

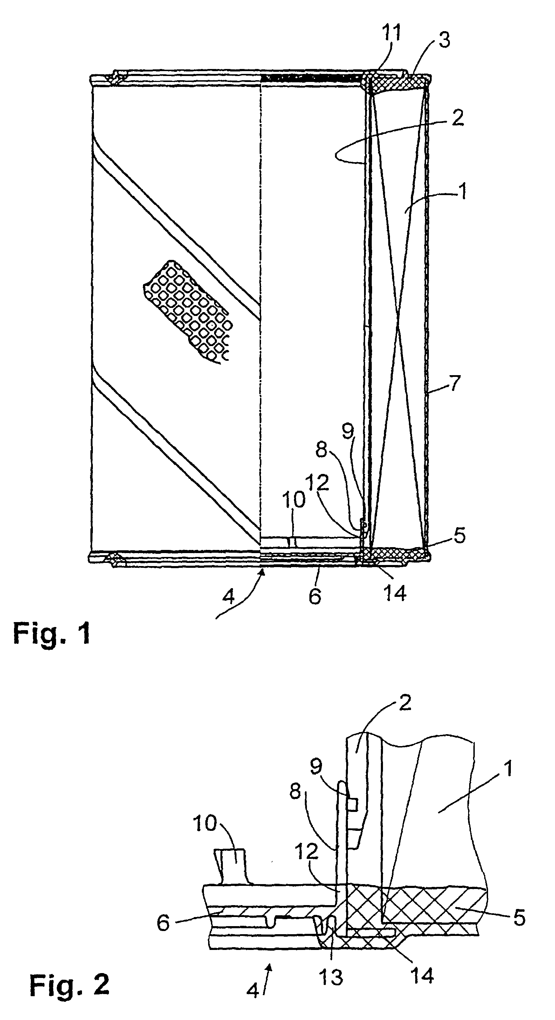

Das Ringfilter nach Fig. 1 besteht aus sternförmig gefaltetem Filterbahnmaterial 1, das sich radial innen auf einer radial durchlässigen Rohrzarge 2 abstützt sowie stirnseitigen Abdeckungen. Diese Abdeckungen sind auf einer Stirnseite ein zentral offener, ringförmiger Verschluß 3 aus angeformtem Polyurethan, wobei das Polyurethan das angrenzende Ende der Rohrzarge 2 umschließt.

Die entgegengesetzte Stirnseite des Ringfilters ist mit einer geschlossenen Endscheibe 4 abgedeckt. Diese Endscheibe 4 besteht radial außen in dem an das Filterbahnmaterial 1 abdeckenden Bereich aus als Polyurethan angeformtem Kunststoff 5 und einer in diesen zentral, radial innen eingeformten Kreisscheibe 6 aus einem anderen relativ starren Kunststoff. Dieser Kunststoff kann beispielsweise Recyclingmaterial sein. Radial außen ist das Filterbahnmaterial mit einem ringförmigen Gitter 7 abgedeckt, das in die stirnseitigen Kunststoffverschlüsse eingebunden ist.

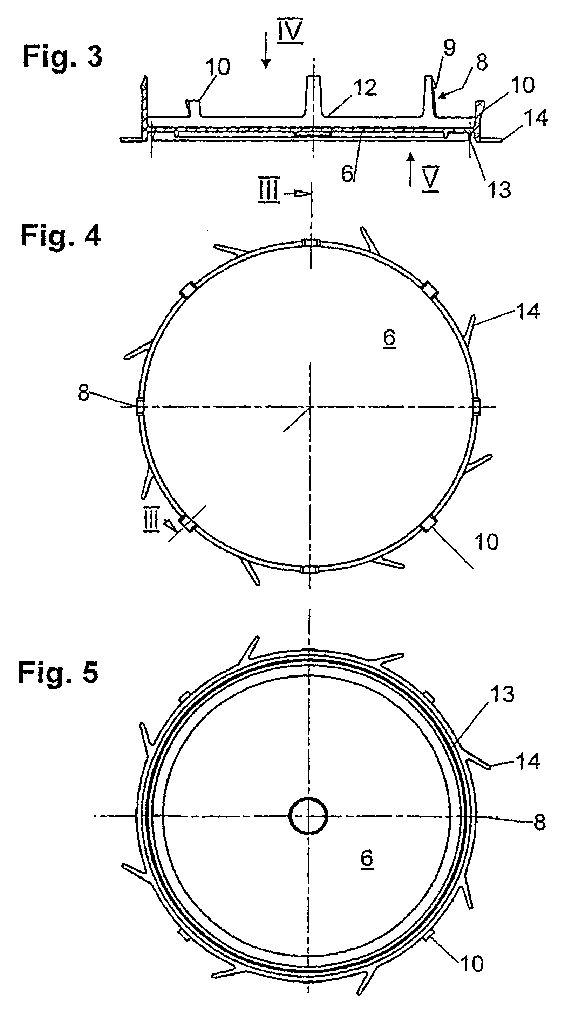

Die in den Fig. 3 bis 5 detailliert dargestellte Kreisscheibe besitzt axial ausgerichtete Federzungen 8 mit endseitig angeformten Widerhaken 9. Auf derjenigen Seite der Kreisscheibe 6, auf der die Federzungen 8 angeformt sind, befinden sich auf den Umfang verteilt axial abstehende Auflager 10. Zum Verbinden der Kreisscheibe 6 mit der Rohrzarge 2 wird die Kreisscheibe 6 mit den Auflagern 10 an die Rohrzarge 2 axial anschlagend angelegt und in Aufnahmen der Rohrzarge 2 über die in diese federnd eingreifenden Federzungen 8 axial verschiebefrei fixiert.

Der Außendurchmesser der Kreisscheibe 6 ist kleiner als der Innendurchmesser des sternförmig gefalteten Filterbahnmaterials 1, wodurch zwischen dem Rand der Kreisscheibe 6 und dem Filterbahnmaterial 1 ein Ringspaltabstand gegeben ist.

Ein erfindungsgemäßes Filter wird bevorzugt wie folgt hergestellt.

Aus Filterbahnmaterial 1 wird ein ringförmiger Filterstern hergestellt, der außen mit einem Gitter 7 überzogen wird. Radial innen wird in das Filterbahnmaterial 1 die Rohrzarge 2 eingeführt. Beim Einführen in das ringförmig vorliegende Filterbahnmaterial 1 ist die Kreisscheibe 6 bereits axial fixiert in dieser Rohrzarge 2 befestigt.

Bei dem so vorbereiteten Ringfilter wird zunächst die zentral offenbleibende Endscheibe angeformt. Das Material für diese Endscheibe ist Polyurethan, dessen flüssige Ausgangskomponenten in eine Form zum Aufschäumen eingegeben werden. In diese Form wird das vorbereitete Ringfilter mit demjenigen Ende gestellt, dessen offene Endscheibe ausgebildet werden soll. In der Form, in die die Komponenten für das aufzuschäumende Polyurethan flüssig eingegeben werden, ist das Ringfilter ausschließlich über lokal kleine Bereiche über die Stirnseite des Filterbahnmaterials 1 an Abstützelementen gelagert. Die Lagerung in der Form ist derart, daß sich die aus Polyurethan bestehende Endscheibe durch Aufschäumen der flüssigen Ausgangskomponenten ausbilden kann. Die Rohrzarge 2 besitzt an ihrem dieser offenen Endscheibe zugewandten Ende einen die Stirnfläche des Filterbahnmaterials axial aufnehmenden Ringbund 11, so daß die Rohrzarge 2 hierdurch eine axial exakt definierte Lage zu dem Filterbahnmaterial 1 einnimmt.

In einem nachfolgenden Herstellungsschritt wird an dem entgegengesetzten Stirnende des Ringfilters die dort anzubringende geschlossene Endscheibe 4 ausgebildet. Zu diesem Zweck wird das vorbereitete Ringfilter mit der entsprechenden Stirnseite in eine Form eingesetzt, die zuvor mit den Ausgangskomponenten für ein aufzuschäumendes Polyurethan ausgefüllt ist. Die Lagerung des Ringfilters in dieser Form erfolgt über die mit der Rohrzarge 2 axial definiert verbundene Kreisscheibe 6. Die Lagerung der Kreisscheibe 6 in der Gießform ist derart, daß die Kreisscheibe 6 nur in einem radial außen liegenden Bereich durch das aufschäumende Polyurethan ein- bzw. umschließbar ist. Ein an der Ringscheibe 6 angeformter, zum Inneren des Ringfilters weisender Ringkragen 12 sorgt dafür, daß von dem Boden der Gießform aufsteigendes Polyurethan gezielt in einem Ringspalt zwischen Kreisscheibe 6 und dem Filterbahnmaterial 1 aufsteigen kann.

An der axial außen zu liegen kommenden Oberfläche der Kreisscheibe 6 ist radial außen zur Erzielung einer Labyrinthdichtung gegenüber dem Polyurethanschaum eine umlaufende Ringnut 13 vorgesehen. Die Auflager 10, auf denen die Rohrzarge 2 axial anliegt, sorgen für radiale Durchtrittsöffnungen, in die aufschäumendes Polyurethan für eine zumindest axiale Anlage an den Ringkragen 12 einströmen kann.

Durch das Ausrichten des vorbereiteten Ringfilters über die Kreisscheibe 6 in der Gießform zum Anschäumen mit Polyurethan ist unabhängig von axialen Längentoleranzen bei dem Filterbahnmaterial stets eine absolut gleiche Einbaulänge des Ringfilters erreichbar.

Die Kreisscheibe 6 kann radial außen mit radial abstehenden Fingern 14 versehen sein, die axial möglichst weit an der in dem Ringfilter nach axial außen zu liegen kommenden Oberfläche angebracht sind. An diesen Fingern 14 kann das Filterbahnmaterial 1 anliegen, wenn bei dem Ringfilter die geschlossene Endscheibe 4 vor der offenen Endscheibe angeformt wird. Derartige Finger 14 haben allerdings den Nachteil, daß eine hiermit versehene Kreisscheibe 6 nicht in einem bereits mit der Rohrzarge verbundenen Zustand zusammen mit der Rohrzarge 2 in den zentralen Hohlraum des Filterbahnmaterials 1 eingeführt werden kann.

Damit die Rohrzarge komplikationslos in den zentralen Hohlraum innerhalb des sternförmig gefaltetem Filterbahnmaterials 1 eingeführt werden kann, ist die Einführkante der Rohrzarge mit einer umlaufenden Einführschräge versehen.

Das beschriebene Ringfilter ist ein Luftfilter für ein Nutzkraftfahrzeug mit einer axialen Länge von 460 mm und einem Außendurchmesser von 310 mm. Der von außen sichtbare Durchmesser des plattenförmigen Einsatzes, das heißt der Kreisscheibe (6), beträgt 170 mm bei einem tatsächlichen Außendurchmesser der Kreisscheibe von 185 mm.

## Patentansprüche

1. Ringfilter aus sternförmig gefaltetem Filterbahnmaterial (1) und einem auf einer seiner beiden Stirnseiten als geschlossene Endscheibe (4) angeformten Verschluß mit einem den zentralen, radial innerhalb des Filterbahnmaterials liegenden Bereich des Verschlusses bildenden plattenförmigen Einsatz (6) aus ausschließlich einem gegenüber dem übrigen Verschlußmaterial (5) anderen Material, wobei an das Fiiterbahnmaterial radial innen eine radial durchlässige, sich etwa über die gesamte axiale Länge des Ringfilters erstreckende Rohrzarge (2) anschließt,
**gekennzeichnet durch die Merkmale,**
- der plattenförmige Einsatz (6) und die Rohrzarge (2) sind über eine gegenseitige Kontaktierung axial gegeneinander fixiert,
- die Rohrzarge (2) besitzt an ihrem dem geschlossenen Ende des Ringfilters entgegengesetzten Ende einen die Stirnfläche des Filterbahnmaterials axial aufnehmenden Ringbund (11),
- das Verschlussmaterial (5) ist ein aufgeschäumter Kunststoff.

2. Ringfilter nach Anspruch 1,
**dadurch gekennzeichnet,**
**daß** das Verschlußmaterial (5) ein Polyurethanschaum ist.

3. Ringfilter nach Anspruch 1 oder 2,
**dadurch gekennzeichnet,**
**daß** der plattenförmige Einsatz (6) mit der Rohrzarge (2) verrastet ist.

4. Ringfilter nach einem der vorhergehenden Ansprüche,
**gekennzeichnet durch** die Merkmale,
- der plattenförmige Einsatz (6) ist eine Kreisscheibe mit einem gegenüber dem Innendurchmesser des Filterbahnmaterials geringeren Außendurchmesser,
- der plattenförmige Einsatz (6) erstreckt sich radial außen axial in den Bereich des Filterbahnmaterials (1),
- in mit der Rohrzarge (2) verbundenem Zustand weist der plattenförmige Einsatz (6) umfangsmäßig etwa gleichmäßig verteilte axiale Abstandsbereiche gegenüber der Rohrzarge (2) auf.

5. Ringfilter nach einem der vorhergehenden Ansprüche,
**dadurch gekennzeichnet,**
**daß** der plattenförmige Einsatz (6) radial außen mit Bezug auf seine an der Rohrzarge (2) einzunehmende Lage einen in Richtung der Rohrzarge (2) abstehenden Ringkragen (12) besitzt.

6. Ringfilter nach einem der vorhergehenden Ansprüche,
**dadurch gekennzeichnet,**
**daß** der plattenförmige Einsatz (6) radial außen, radial abstehende Finger (14) für einen axialen Anschlag an das Filterbahnmaterial (1) aufweist.

7. Ringfilter nach einem der vorhergehenden Ansprüche,
**dadurch gekennzeichnet,**
**daß** die Finger (14) in dem unteren Bodenbereich angeordnet sind und in Bezug auf die Höhe der radialen Außenfläche des plattenförmigen Einsatzes (6) eine axial äußerst geringe Abmessung aufweisen.

8. Ringfilter nach einem der vorhergehenden Ansprüche,
**dadurch gekennzeichnet,**
**daß** an dem Ringkragen (12) axiale Auflager (10) für einen axialen Anschlag an der Rohrzarge (2) vorgesehen sind.

9. Ringfilter nach einem der vorhergehenden Ansprüche,
**dadurch gekennzeichnet,**
**daß** der plattenförmige Einsatz (6) zur Erzielung einer Rastverbindung gegenüber der Rohrzarge (2) mit axial von. diesem Einsatz (6) in Richtung der Rohrzarge (2) abstehenden, radial federnden Federzungen (8) versehen ist, wobei die Federzungen an ihren freien Enden für eine axiale Fixierung an der Rohrzarge (2) als Widerhaken (9) ausgebildet sind.

## Claims

1. Ring filter made of star-shaped folded filtering material and a closure molded onto one of its two front sides as a closed end disk having a plate-shaped insert, which forms a central region of the closure lying radially inside the filtering material, exclusively made of a material different from the other closure material, with a radially permeable ring frame, which extends approximately over the entire axial length of the ring filter, adjoining the filtering material radially on the inside,
**characterized by** the features,
- the plate-shaped insert (6) and the tubular frame (2) are fixed axially relative to one another by mutual contact,
- on its end opposite the closed end of the ring filter, the tubular frame (2) has a ring shoulder (11) which axially receives the front side of the filtering material,
- the closure material (5) is a foamed plastic.

2. Ring filter according to claim 1,
**characterized in that**
the closure material (5) is a polyurethane foam.

3. Ring filter according to claim 1 or 2,
**characterized in that**
the plate-shaped insert (6) is interlocked with the tubular frame (2).

4. Ring filter according to one of the preceding claims,
**characterized by** the features
- the plate-shaped insert (6) is a circular disk having an outer diameter smaller than the inner diameter of the filtering material,
- the radial outside of the plate-shaped insert (6) extends axially into the region of the filtering material (1),
- when it is connected with the tubular frame (2), the axial distance ranges of the plate-shaped insert (6) distributed around the circumference are approximately uniform relative to the tubular frame (2).

5. Ring filter according to one of the preceding claims,
**characterized in that**
the plate-shaped insert (6) has a ring collar (12) projecting in the direction of the tubular frame (2) radially outward relative to its position to be assumed on the tubular frame (2).

6. Ring filter according to one of the preceding claims,
**characterized in that**
the plate-shaped insert (6) has radially projecting fingers (14) radially outside for an axial stop on the filtering material (1).

7. Ring filter according to one of the preceding claims,
**characterized in that**
the fingers (14) are located in the lower floor region and have an extremely small axial dimension relative to the height of the radial outer surface of the plate-shaped insert (6).

8. Ring filter according to one of the preceding claims,
**characterized in that**
axial supports (10) are provided on the ring collar (12) for an axial stop on the tubular frame (2).

9. Ring filter according to one of the preceding claims,
**characterized in that**
the plate-shaped insert (6) is provided with radially elastic flexible tongues (8), projecting axially from this insert (6) in the direction of the tubular frame (2), to achieve an interlocking connection with the tubular frame (2), with the flexible tongues being implemented as barbs (9) on their free end for axial fixing on the tubular frame (2).

## Revendications

1. Filtre annulaire composé d'un matériau filtrant en feuille (1) plié en étoile et d'une fermeture, conformée sur l'une de ses deux extrémités frontales sous forme de disque d'extrémité (4) fermé, comprenant un insert en forme de plaque (6), formant la zone centrale de la fermeture située dans le sens radial à l'intérieur du matériau filtrant en feuille, et composé exclusivement d'un autre matériau par rapport au reste du matériau de fermeture (5), un cadre tubulaire (2) perméable dans le sens radial, s'étendant à peu près sur toute la longueur axiale du filtre annulaire, se raccordant dans le sens radial interne au matériau filtrant en feuille, **caractérisé par** les caractéristiques :
- l'insert en forme de plaque (6) et le cadre tubulaire (2) sont fixés l'un par rapport à l'autre dans le sens axial par l'intermédiaire d'une mise en contact mutuelle,
- sur son extrémité opposée à l'extrémité fermée du filtre annulaire, le cadre annulaire (2) présente un épaulement annulaire (11), recevant dans le sens axial la surface frontale du matériau filtrant en feuille,
- le matériau de fermeture (5) est une matière plastique moussée.

2. Filtre annulaire suivant la revendication 1, **caractérisé en ce que** le matériau de fermeture (5) est une mousse de polyuréthanne.

3. Filtre annulaire suivant l'une des revendications 1 et 2, **caractérisé en ce que** l'insert en forme de plaque (6) est enclenché avec le cadre tubulaire (2).

4. Filtre annulaire suivant l'une des revendications précédentes, **caractérisé par** les caractéristiques :
- l'insert en forme de plaque (6) est un disque circulaire d'un diamètre extérieur plus faible par rapport au diamètre intérieur du matériau filtrant en feuille,
- l'insert en forme de plaque (6) s'étend dans le sens axial, dans le sens radial externe, dans la zone du matériau filtrant en feuille (1),
- dans l'état d'assemblage avec le cadre tubulaire (2), l'insert en forme de plaque (6) présente des zones d'écartement axiales par rapport au cadre tubulaire (2) à peu près régulièrement réparties sur le pourtour.

5. Filtre annulaire suivant l'une des revendications précédentes, **caractérisé en ce que** l'insert en forme de plaque (6) présente, dans le sens radial externe par rapport à sa position d'occupation sur le cadre tubulaire (2), un collet annulaire (12) dépassant en direction du cadre tubulaire (2).

6. Filtre annulaire suivant l'une des revendications précédentes, **caractérisé en ce que** l'insert en forme de plaque (6) présente dans le sens radial externe des doigts (14) en saillie radiale, pour une butée axiale sur le matériau filtrant en feuille (1).

7. Filtre annulaire suivant l'une des revendications précédentes, **caractérisé en ce que** les doigts (14) sont disposés dans la zone de fond inférieure, et présentent un dimensionnement extrêmement faible dans le sens axial par rapport au niveau de la surface externe radiale de l'insert en forme de plaque (6).

8. Filtre annulaire suivant l'une des revendications précédentes, **caractérisé en ce que** des supports axiaux (10) pour une butée axiale sur le cadre tubulaire (2) sont prévus sur le collet annulaire (12).

9. Filtre annulaire suivant l'une des revendications précédentes, **caractérisé en ce que** l'insert en forme de plaque (6), pour obtenir un assemblage par enclenchement avec le cadre tubulaire (2), est muni de languettes élastiques (8) dans le sens radial dépassant dans le sens axial de cet insert (6) en direction du cadre tubulaire (2), ces languettes élastiques étant réalisées sur leurs extrémités libres sous forme de contre-crochets (9) pour une fixation axiale sur le cadre tubulaire (2).
